# EUROPÄISCHE PATENTANMELDUNG

(11) **EP 1 331 061 A1**
(43) Veröffentlichungstag der Anmeldung: **30.07.2003**
(21) Anmeldenummer: 03001357.7
(22) Anmeldetag: 24.01.2003
(51) Int. Cl.: B23Q 3/00, B23Q 3/06, B25B 1/22, B25B 5/14

(54) **Spannvorrichtung**

(30) Priorität: 29.01.2002 DE 10203389
(71) Anmelder: Alfing Kessler Sondermaschinen GmbH, 73433 Aalen (DE)
(72) Erfinder: Paulik, Alois, Ortsteil Schrezheim, 73479 Ellwangen (DE); Jansen, Hariolf, 73492 Rainau (DE)
(74) Vertreter: HOFFMANN - EITLE

(57) **Zusammenfassung**

Die vorliegende Erfindung betrifft eine Spannvorrichtung (1) zum Spannen von Werkstücken (2), insbesondere Pleuelstangen, für deren mechanische Bearbeitung auf einer Werkzeugmaschine, die eine Spannplatte (8), eine Zentriereinrichtung (28) zum Zentrieren der Spannplatte (8) in der auf der Werkzeugmaschine vorbestimmten Position, eine Befestigungseinrichtung (12) zum Anbringen der Spannplatte (8) auf der Werkzeugmaschine, mindestens ein Spannelement (4,6), das an einer Stirnfläche der Spannplatte (8) angebracht ist, zum Spannen des Werkstücks (2) auf die Spannplatte (8), wobei das Spannelement (4,6) zwischen einer ersten das Werkstück (2) freigebendende Position und einer zweiten das Werkstück (2) aufspannendenden Position bewegbar ist, mindestens eine Betätigungseinrichtung (24), die mit dem Spannelement (4,6) zusammenwirkt, um das Spannelement (4,6) zwischen der ersten Position und der zweiten Position zu bewegen, wodurch das Werkstück (2) auf die Spannplatte (8) aufgespannt bzw. freigegeben wird, aufweist.

## Beschreibung

### Gebiet der Erfindung

Die Erfindung betrifft eine Spannvorrichtung, und insbesondere eine Spannvorrichtung zum Spannen von Werkstücken, wie z. B. Pleuelstangen, für deren mechanische Bearbeitung auf einer Werkzeugmaschine.

Eine Spannvorrichtung dient dabei dazu, das Werkstück positionsgenau auf der Werkzeugmaschine.zu halten und für die mechanische Bearbeitung lagegenau zu fixieren.

### Stand der Technik

Bei herkömmlichen Spannvorrichtungen wird das Werkstück, wie z. B. eine Pleuelstange, auf einen mit Spannelementen versehenen Körper aufgespannt, der an einer dafür vorgesehenen Position auf einer Werkzeugmaschine angebracht ist. Anschließend kann das Werkstück mechanisch bearbeitet werden. Die mechanische Bearbeitung derartiger Werkstücke umfasst das Schleifen, Sandstrahlen, Bohren, Gewindeschneiden etc., wobei während der mechanischen Bearbeitung sehr genau darauf geachtet werden muss, dass das Werkstück innerhalb gegebener Toleranzen stationär auf der Spannplatte aufgespannt bleibt.

Die Form und Art der Spannelemente hängt natürlich von der Form und Art des zu bearbeitenden Werkstückes ab. Normalerweise werden die Spannelemente über z.B. eine Schraubbefestigung an dem Spannkörper angebracht. Die Befestigung der Werkstücke mittels der Spannelemente am Spannkörper ist derart, dass der Austausch des Werkstückes auf einfache und schnelle Weise vollzogen werden kann, z.B. unter Zuhilfenahme automatisierter, z.B. hydraulischer Spanneinrichtungen der Werkzeugmaschine. So sind dem Fachmann Schnellspannelemente bekannt, wie sie z.B. bei der spanenden Bearbeitung an Fräsmaschinen verwendet werden.

Aufgrund der unterschiedlichen Größen und Formen der zu bearbeitenden Werkstücke müssen die am Körper angebrachten Spannelemente individuell an das jeweilige Werkstück angepasst sein. Ein Einstellen bzw. Anpassen der Spannelemente an die jeweilige Größe und Form des Werkstücks ist somit erforderlich gewesen, wenn nach dem Bearbeiten einer Werkstückgröße oder -typs auf eine andere Werkstückgröße oder -typ gewechselt werden soll. Der Austausch der am Körper angebrachten Spannelemente ist dabei aufwendig, da er häufig manuell vorgenommen werden muss und die Spannelemente genau justiert werden müssen. Dies bringt unerwünscht lange Rüstzeiten und Maschinenstillstandszeiten mit sich, die sich folglich nachträglich auf die Wirtschaftlichkeit der Werkzeugmaschine auswirken.

### Darstellung der Erfindung

Es ist daher eine Aufgabe der vorliegenden Erfindung, eine Spannvorrichtung zum Spannen von Werkstücken, insbesondere Pleuelstangen, für deren mechanische Bearbeitung auf einer Werkzeugmaschine bereit zu stellen. Durch die Aufteilung der Spannvorrichtung in den fest mit der Maschine verbundenen Spannvorrichtungsgrundkörper und die wechselbare Spannplatte wird ein wesentlicher Beitrag zur Verkürzung der Rüstzeiten geleistet.

Die Aufgabe der vorliegenden Erfindung wird durch eine Vorrichtung mit den Merkmalen des Anspruches 1 gelöst.

Die Rüstzeit kann wesentlich verkürzt werden kann, wenn eine Anzahl von vorzugsweise gleich großen Werkstücken, die vorteilhaft die gleiche Form aufweisen, vollautomatisch auf eine Spannplatte aufgespannt werden, und nach der Bearbeitung dieser Anzahl von Werkstücken die Spannplatte von der Werkzeugmaschine abgenommen und durch eine auf einen anderen Werkstücktyp angepasste Spannplatte ersetzt wird. In der Regel sind die Spannelemente auf ein bestimmtes Werkstück, z.B. Größe oder Typ, eingestellt, und danach wird die Spannplatte auf die Auflagefläche des Spannvorrichtungsgrundkörpers montiert und vollautomatisch mit Werkstücken bestückt. Durch das Austauschen der Spannplatte ist die Stillstandszeit der Werkzeugmaschine verkürzt, da ein Einstellen der Spannelemente nicht mehr im montierten Zustand der Spannvorrichtung auf der Werkzeugmaschine durchgeführt wird, sondern eine Spannvorrichtung mit bereits auf eine bestimmte Werkstückart voreingestellten Spannelementen auf die Werkzeugmaschine angebracht wird. Somit ist die Rüstzeit der Bearbeitungsmaschine wesentlich verkürzt, was sich positiv auf die Wirtschaftlichkeit der Werkzeugmaschine auswirkt, insbesondere in großen Industrieanlagen. Voraussetzung dafür ist natürlich, dass die Spannplatte auf einfache Weise von der Werkzeugmaschine demontiert und durch eine andere Spannplatte ausgetauscht werden kann.

Der Erfindung liegt der Gedanke zugrunde, die Spannplatte mit Hilfe einer Zentriereinrichtung in eine auf dem mit der Werkzeugmaschine fest verbundenen Spannvorrichtungsgrundkörper dafür vorgesehene Position vorzuzentrieren und anschließend durch eine Befestigungseinrichtung auf der Werkzeugmaschine zu montieren, wobei die auf der Spannplatte vorgesehenen Spannelemente schnell und einfach über eine Betätigungseinrichtung in eine Position gebracht werden können, in der Werkstücke einsetzbar sind bzw. die Werkstücke innerhalb gegebener Toleranzen aufgespannt werden können.

Bevorzugte Ausführungsformen der vorliegenden Erfindung sind in den Unteransprüchen 2 bis 17 beschrieben.

Vorzugsweise ist ein Kupplungselement vorgesehen, das eine Verbindung zwischen der Betätigungseinrichtung und der Spannplatte herstellt, und eine von der Betätigungseinrichtung erzeugte Kraft auf das Spannelement der Spannplatte überträgt, wobei das Kupplungselement in einer Position des Spannelements, in der das Spannelement das auf der Spannplatte befindliche Werkstück nicht aufspannt, entfernbar ist, um die Verbindung zwischen der Spannplatte und der Betätigungseinrichtung zu trennen, wodurch das Herausnehmen der Spannplatte aus der Spannvorrichtung ermöglicht ist. Auf diese Weise wird vorteilhaft der Austausch der Spannplatte ermöglicht, ohne dass zeitaufwendige und arbeitsintensive Maßnahmen seitens des Bedienpersonals erforderlich sind.

Eine weitere bevorzugte Ausführungsform der vorliegenden Erfindung sieht eine Hydraulikvorrichtung als Betätigungseinrichtung vor, die über einen Kolbenhub das Spannelement auf der Spannplatte betätigt. Eine Hydraulikvorrichtung kann einfach und zuverlässig betrieben werden, erfordert keine besonders aufwendigen Instandhaltungsmaßnahmen und ist in der Lage, eine ausreichend große Spannkraft, die von den Spannelementen direkt auf das Werkstück übertragen wird, zu erzeugen. Bevorzugt beträgt der Kolbenhub der Hydraulikvorrichtung in etwa maximal 10 mm.

Eine weitere bevorzugte Ausführungsform der vorliegenden Erfindung sieht ein Kupplungselement vor, das formschlüssig dem der Spannplatte zugewandten Ende des Hydraulikkolbens angepasst ist. Auf diese Weise wird ein Verrutschen des Kupplungselements in Bezug auf die Hydraulikvorrichtung während des Betriebs der Werkzeugmaschine wirkungsvoll unterbunden, sowie ein einfaches und sicheres Verbinden der Betätigungseinrichtung mit der Spannplatte sichergestellt.

Eine weitere bevorzugte Ausführungsform der vorliegenden Erfindung sieht ein ortsfestes Halteelement an der Spannplatte vor, das vor allem dann benötigt wird, wenn die Spannplatte in vertikaler Ausrichtung auf die Werkzeugmaschine montiert wird, um ein Abgleiten bzw. Herausfallen des Werkstücks zu verhindern.

Weiterhin bevorzugt ist das zu bearbeitende Werkstück eine Pleuelstange, die ein großes sowie ein kleines Pleuelauge aufweist.

Eine noch weitere bevorzugte Ausführungsform der vorliegenden Erfindung sieht als Spannelemente auf der Spannplatte zwei backenförmige Spannelemente vor, die mit der Spannplatte bewegbar befestigt sind und deren Form an die Form des zu bearbeitenden Werkstücks angepasst ist. Sie dienen zur Zentrierung und zum Spannen des Werkstücks, z.B. des grossen Pleuelauges. Des Weiteren ist ein plattenförmig ausgebildetes Spannelement vorgesehen, um das andere Ende des zu bearbeitenden Werkstücks, wie z. B. des kleinen Pleuelauges, auf die Spannplatte aufzuspannen. Die Pleuelstange befindet sich dabei zwischen der Spannplatte und dem plattenförmig ausgebildeten Spannelement. Mit dieser Art von Spannelementen ist eine örtliche Verschiebung des Werkstücks während der mechanischen Bearbeitung auf ein Minimum reduziert und leistet so einen wesentlichen Beitrag zur Präzision der mechanischen Bearbeitung.

Bevorzugt ist ein V-förmiges Halteelement vorgesehen, wobei der Öffnungswinkel des V-förmigen Halteelements auf verschiedenen Spannplatten unterschiedlich ist, um so verschieden große Pleuelaugen darin aufnehmen zu können. Dadurch ist die Flexibilität der Spannvorrichtung und die Einfachheit der Bedienung um ein weiteres erhöht.

Bevorzugt weist die der Auflagefläche der Werkzeugmaschine benachbarte Schmalseite der Spannplatte eine Bohrung auf zum Unterbringen einer Zentriereinrichtung. In einer bevorzugten Ausführungsform wird eine Fixierbuchse als Zentriereinrichtung verwendet.

In einer weiteren bevorzugten Ausführungsform werden die das große Pleuelauge aufspannenden, backenförmigen Spannelemente und das das kleine Pleuelauge aufspannende, plattenförmig ausgebildete Spannelement unabhängig voneinander durch jeweils einen Hydraulikkolben betätigt.

Die Verwendung der Spannvorrichtung in Zusammenhang mit einer Werkzeugmaschine zur mechanischen Bearbeitung von Werkstücken ist Gegenstand des Anspruches 18.

### Kurze Beschreibung der Figuren

Nachfolgend wird die Erfindung rein beispielhaft anhand der beigefügten Figuren beschrieben, von denen:
- Fig. 1: eine Vorderansicht der Spannvorrichtung mit aufgesetzter Spannplatte gemäß der vorliegenden Erfindung ist;
- Fig. 2: eine seitliche Querschnittsansicht der in Figur 1 gezeigten Spannvorrichtung ist, und zwar von der rechten Seite in der Figur 1 aus betrachtet;
- Fig. 3: eine Draufsicht der in Figur 1 gezeigten Spannvorrichtung ist, und zwar von oben in der Figur 1 aus betrachtet.

### Wege zur Ausführung der Erfindung

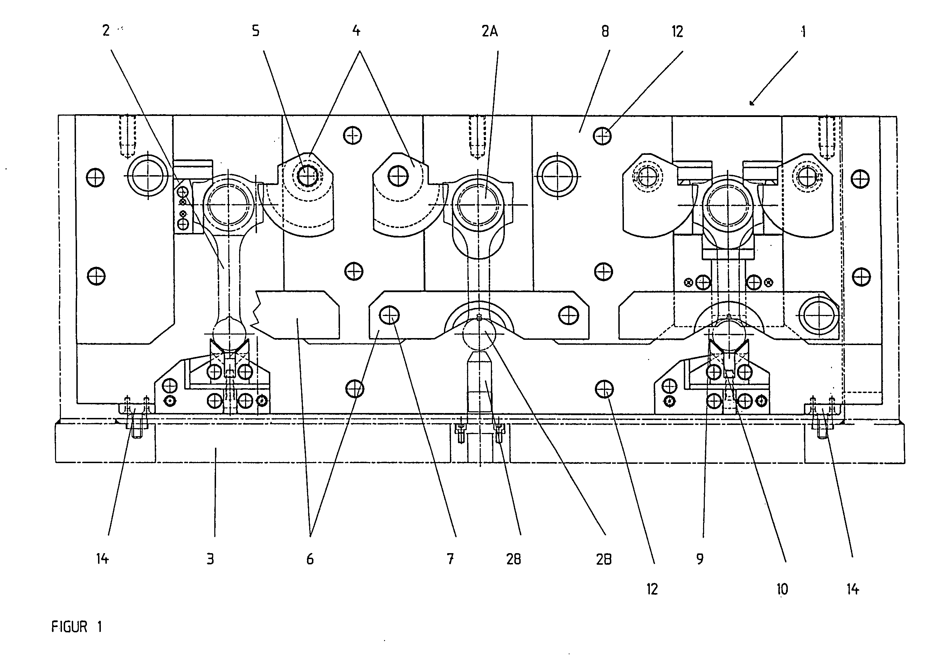

Figur 1 ist eine Vorderansicht einer Spannvorrichtung 1 gemäß der vorliegenden Erfindung. In dieser Ansicht liegt eine der großen Stirnflächen der im Wesentlichen quaderförmigen Spannplatte 8 in der Zeichenebene.

In der Figur 1 sind insgesamt drei Pleuelstangen 2 in gleichem Abstand zueinander auf der Spannplatte 8 dargestellt. Das in der Zeichnung obere, große Pleuelauge 2A wird mit Hilfe zweier polygonförmiger, einen Kreisausschnitt aufweisende backenförmiger Spannelemente 4 auf die Spannplatte 8 aufgespannt. Die backenförmigen Spannelemente 4 sind dabei mittels einer Schraubbefestigung 5 auf der Spannstange 20 befestigt. Die konstruktive Ausgestaltung der backenförmigen Spannelemente 4 ist derart, dass eine über die Länge des Kreisausschnitts verlaufende, zur Spannplatte 8 gerichtete Phase ( in der Figur 1 als gestrichelte Linie angedeutet) an einer äußeren Kante des großen Pleuelauges 2A anliegt und im aktivierten Zustand des backenförmigen Spannelements 4 so das große Pleuelauge 2A auf die Spannplatte 8 aufspannt.

Das in der Figur 1 gezeigte, das untere Pleuelauge 2B aufspannende, plattenförmig ausgebildete, im Wesentlichen senkrecht zur Längsachse der Pleuelstange 2 verlaufende Spannelement 6 ist über zwei Schraubverbindungen 7 an einem durch die gesamte Spannplattendicke verlaufende Spannstange 20 befestigt. Bei einer Bewegung der Spannstange 20 in die Zeichenebene der Figur 1 drückt das plattenförmig ausgebildete Spannelement 6 den unteren Bereich einschließlich des kleinen Pleuelauges 2B der Pleuelstange 2 derart stark an die Spannplatte 8 an, sodass eine Verschiebung während der mechanischen Bearbeitung der Pleuelstange 2 auf der Spannplatte 8 vermieden werden kann. Das plattenförmig ausgebildete Spannelement 6 weist dabei an seinem in der Figur 1 gezeigten unteren Ende eine dreieckstumpfförmige Ausnehmung 9 auf, sodass die Öffnung des unteren Pleuelauges nicht durch das plattenförmig ausgebildete Spannelement 6 abgedeckt wird. Dies ist für das Eintauchen der Bohrstange notwendig.

Da die Spannvorrichtung 1 bzw. die Spannplatte 8 bevorzugt in vertikaler Ausrichtung auf einer dafür vorgesehenen Position auf der Werkzeugmaschine montiert wird, so weist die bevorzugte Ausführungsform der vorliegenden Erfindung ein V-förmiges Haltemittel 10 auf, das einen Bereich des Umfangs des unteren Pleuelauges 2B aufnimmt. Die beiden Wangen des Halteelements 10, die zusammen die V-förmige Aufnahme für das untere Pleuelauge 2B bilden, können ebenfalls derart auf der Spannplatte 8 befestigt sein, dass sie innerhalb bestimmter Grenzen abgestimmt werden können, um eine exakte Lage der Werkstücke zueinander auf der Spannplatte sicher zu stellen.

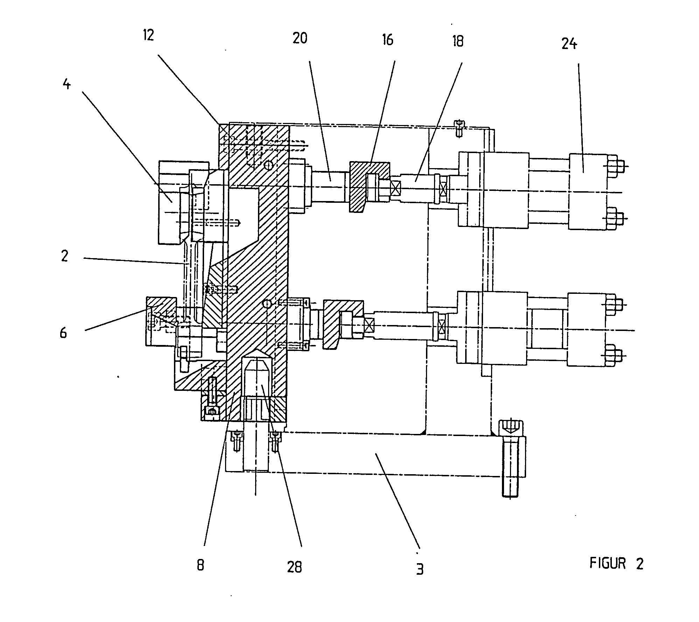

Die Spannplatte 8 wird auf einer Auflagefläche des Spannvorrichtungsgrundkörpers 3 montiert. Der Spannvorrichtungsgrundkörper 3 weist eine Zentrierbuchse 28 auf, die in eine dafür vorgesehene Bohrung an der in den Figuren 1 und 2 gezeigten unteren Schmalseite der Spannplatte 8 zum Zentrieren der Spannplatte 8 auf der Auflagefläche des Spannvorrichtungsgrundkörpers 3 eingeführt wird. Durch das Aufsetzen der Spannplatte 8 auf die Zentrierbuchse 28 bleibt lediglich ein Freiheitsgrad der Bewegung der Spannplatte 8 übrig, nämlich die Drehung der Spannplatte 8 in der Ebene der Auflagefläche. Bei der vorliegenden bevorzugten Ausführungsform werden eine Mehrzahl von Befestigungselementen 12 verwendet, die in Eingriff mit dem Spannvorrichtungsgrundkörper 3 treten, um so eine örtliche Fixierung der Spannplatte 8 auf der Auflagefläche zu ermöglichen. Derartige Befestigungseinrichtungen 12 umfassen Klauenverbindungen (nicht gezeigt), die mit einem entsprechenden Stift in einer Ausnehmung auf der Auflagefläche in Eingriff treten, Schraubverbindungen, Nullpunktspannsysteme, hydraulische Aufspannsysteme, Aufspannung mittels Federn, Verbindungen magnetischer Art etc. Da derartige Verbindungen dem Fachmann auf diesem technischen Gebiet bekannt sind, wird eine Beschreibung derselben hier weggelassen.

Eine Feinjustierung der auf der Spannplatte 8 aufzuspannenden Pleuelstangen 2 geschieht über dafür vorgesehene Abstimmplatten 14. Mittels dieser Abstimmplatten 14 kann die Position der Pleuelstangen 2 in der Ebene der Spannplatte 8 verändert werden, bevor diese auf die Spannplatte aufgespannt werden. Diese Abstimmplatten werden einmalig bei der Herstellung der Spannplatten eingerichtet.

In Figur 2 ist die Spannplatte in vertikaler Ausrichtung in Bezug auf die Auflagefläche des Spannvorrichtungsgrundkörpers 3 gezeigt. Des Weiteren sind in der Zeichnung oben die backenförmig ausgebildeten Spannelemente 4 und unten das plattenförmig ausgebildete Spannelement 6 gezeigt. Am rechten Rand der Zeichnung sind der Hydraulikzylinder 24 dargestellt. Der in dem Hydraulikzylinder 24 verlaufende Hydraulikkolben übt eine Kraft auf eine durch die Spannplatte 8 hindurchführende Spannstange 20 ausübt, die wiederum die Kraft auf die Werkstücke überträgt. Diese Kraft bewirkt eine translatorische Bewegung des unteren als auch der oberen Spannelemente 4, 6 senkrecht zur Ebene der Spannplatte 8. Die translatorische Bewegungslänge reicht aus, um das untere Pleuelauge 2B bzw. das obere Pleuelauge 2A freizugeben, sodass die Pleuelstange mittels eines Roboterarms von der Spannplatte 8 entnommen und durch eine neu zu bearbeitende Pleuelstange ersetzt werden kann.

Wird anschließend der Hydraulikdruck im Hydraulikzylinder 24 umgesteuert, so bewirkt diese Druckumschaltung eine Rückwärtsbewegung des Hydraulikzylinders 24 bzw. des Hydraulikkolbens, d.h. zur rechten Seite in der Figur. Auf diese Weise wird die neu zu bearbeitende Pleuelstange auf die Spannplatte 8 durch die Spannelemente 4,6 aufgespannt. Wie in der Figur 2 dargestellt, wird das obere und das untere Spannelement jeweils durch unabhängig voneinander betriebene Hydraulikzylinder 24 betätigt. Es ist allerdings genauso vorstellbar, dass beide Spannelemente 4, 6 über eine Hydraulikdruckvorrichtung unter Zwischenschaltung eines T-Stücks (nicht gezeigt), das die von der Hydraulikvorrichtung erzeugte Kraft entweder auf die für das obere Spannelement vorgesehene Spannstange oder auf die für das untere Spannelement vorgesehene Spannstange überträgt, betätigt werden können.

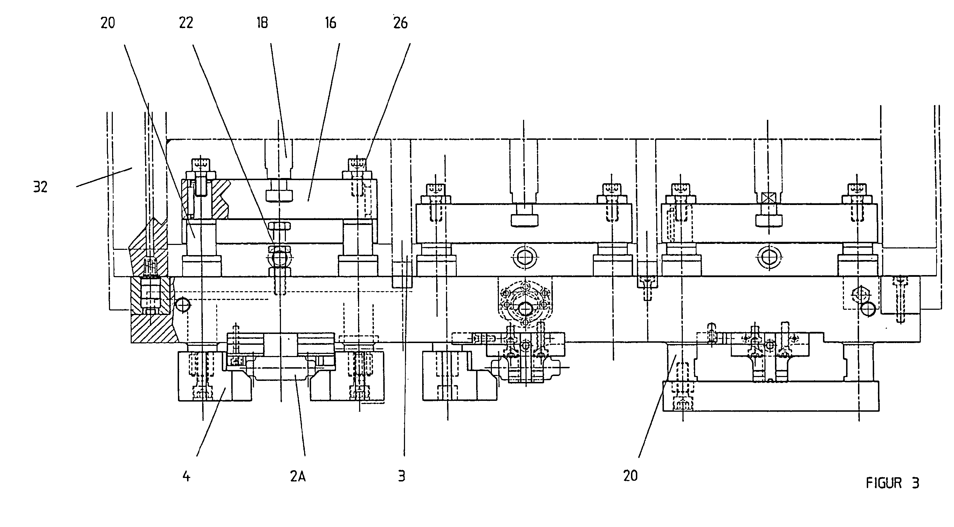

Die Hydraulikzylinder 24 sind in beiden Fällen über ein Kupplungselement 16 mit der Spannstange 20 verbunden. Das Kupplungselement 16, wie in der Figur 3 dargestellt, ist mit der Spannstange 20 über Schraubverbindungen 26 verbunden. Das Kupplungselement 16 weist eine derartige Form auf, sodass es einfach mit einem weiteren Kupplungselement 18, welches mit dem stationären Spannvorrichtungsgrundkörper 3 verbunden ist und eine Kraftübertragung von dem Hydraulikzylinder 24 auf das Kupplungselement 16 ermöglicht, in Eingriff gebracht werden kann. In dieser bevorzugten Ausführungsform weist das Kupplungselement 16 eine U-Form auf. Der pilzförmig ausgebildete Kopf des Kupplungsteils 18, das an dem stationären Spannvorrichtungsgrundkörper 3 montiert ist, sitzt dabei formschlüssig in der Sohle der U-Form. Ein derartige Form erleichtert das Herausnehmen des Kupplungselements 16 und ein Lösen der Verbindung des Hydraulikzylinders 24 mit der Spannstange 20 der Spannplatte 8. Dies ist deshalb von großem Vorteil, da auf diese Weise der Hydraulikzylinder 24 auf der Werkzeugmaschine verbleiben kann, wodurch die Handhabung der Spannplatte 8 vereinfacht als auch deren Gewicht erheblich reduziert ist.

Das Verbinden des Kupplungselements 18 auf der Kolbenstange des Hydraulikzylinders 24 mit der Spannplatte 8 geschieht durch einfaches Aufsetzen des Kupplungselements 16 von oben in die Nut. Dadurch wird erreicht, dass der pilzförmig ausgebildete Kopf des Kupplungselements 18 in der Sohle des U-förmig ausgebildeten Kupplungselementes 16 stationär verankert bleibt. In diesem Zusammenhang ist zu erwähnen, dass anders ausgebildete Kupplungselemente dem Fachmann bekannt sind und eine Beschreibung derselben aus diesem Grunde hier weggelassen ist. Ebenfalls sind Betätigungseinrichtungen vorstellbar, nicht eine Kraft aufgrund eines Hydraulikdruckes erzeugen.

Figur 3 ist eine Draufsicht der Spannvorrichtung 1, in der am oberen Ende in der Figur 3 lediglich das Kupplungselement 18, aber nicht der Hydraulikzylinder 24 gezeigt sind. In dieser Figur ist besonders deutlich herausgestellt, wie die Bewegung des Kupplungselements 18 und eine zwangsläufig damit verbundene Verschiebung der Spannstange 20 die translatorische Bewegung der Spannelemente 4, 6 senkrecht zur Ebene der Spannplatte 8 bewirken. Links in der Figur ist ein Zustand gezeigt, in dem das obere, große Pleuelauge 2A auf der Spannplatte 8 aufgespannt ist. Rechts in der Figur ist ein Zustand gezeigt, in dem das untere, plattenförmig ausgebildete Spannelement 6 ausreichend weit von der Spannplatte 8 wegbewegt worden ist, um so das in der Figur angedeutete untere, kleine Pleuelauge 2B freizugeben. In diesem entspannten Zustand kann das Werkstück, hier das grosse und kleine Pleuelauge, aus der Vorrichtung nach oben entnommen werden und durch eine neu zu bearbeitende Pleuelstange ersetzt werden.

Wie ebenfalls aus der Figur 3 deutlich hervorgeht, ist ein Anschlag 22 auf der Seite der Spannplatte 8 vorgesehen, die zum Hydraulikzylinder 24 hin gerichtet ist. Dieser Anschlag bewirkt, dass ein maximaler Verfahrweg des Hydraulikkolbens und damit verbunden des Kupplungselements 18 nicht überschritten werden kann. In dieser Ausführungsform ist dieser Anschlag als Schraubenkopf ausgebildet, der mit Hilfe einer Mutter an der dafür vorgesehenen Seite der Spannplatte 8 befestigt ist. Andere Anschläge sind dem Fachmann bekannt, und deshalb wird in diesem Zusammenhang auf eine ausführliche Beschreibung derselben verzichtet.

Wie bereits oben beschrieben worden ist, werden die Pleuelstangen 2 auf der Spannplatte 8 unter Zugwirkung senkrecht zur Spannplattenebene durch die Spannelemente 4, 6 aufgespannt. Da eine derartige Zugkraft ein relativ hohes Biegemoment auf die Zentriereinrichtung 28 der Spannplatte 8 ausübt, muss die Spannvorrichtung 1 in dieser bevorzugten Ausführungsform durch Stützelemente gestützt werden. In dieser Ausführungsform sind diese Stützelemente als Stützwände 32 ausgebildet, die seitlich, in der Figur am rechten und linken Rand, an die Spannplatte 8 angrenzen. Solche Stützelemente sind deshalb notwendig, da die geringste Verschiebung der Spannplatte aus seiner vorbestimmten Position zu einer Auslenkung der Spannplatte bezüglich der Position des Werkzeugkopfes der Werkzeugmaschine führen würde, was zu nicht vertretbaren Toleranzen bei der anschließenden mechanischen Bearbeitung führen würde. Andere Stützelemente als diejenigen, die in der Figur 3 gezeigt sind, sind ebenfalls vorstellbar.

Wenn die mechanische Bearbeitung der Pleuelstangen 2 abgeschlossen ist, so werden durch die Umschaltung des Hydraulikdrucks in dem Hydraulikzylinder 24 die Spannelemente 4,6 translatorisch senkrecht zur Spannplattenebene verfahren, um ein Freigeben der beiden Pleuelaugen 2A, 2B der Pleuelstange 2 zu bewirken. Sollte allerdings während einer nächsten Bearbeitungsphase eine unterschiedliche Pleuelstangengröße bearbeitet werden, so kann die gesamte Spannplatte 8 durch Lösen der Schraubverbindungen 12 und eine nach oben hin gerichtete Bewegung der Spannplatte 8 von dem Hydraulikzylinder 24 getrennt werden. Auf diese Weise wird die Spannplatte 8 mit allen dazugehörigen Elementen von der Werkzeugmaschine innerhalb kurzer Zeit getrennt. Die auf diese Weise entnommene Spannplatte 8 kann anschließend durch eine bereits präparierte, eine auf eine andere Pleuelstangengröße vorjustierte Spannplatte ersetzt werden, indem diese neue Spannplatte von oben her auf die Zentrierbuchse auf der Auflagefläche des Spannvorrichtungsgrundkörpers gesetzt und mit den seitlichen Stützwänden fest verbunden wird. Gleichzeitig werden die Spannelemente mit dem Hydraulikzylinder durch einfaches Aufsetzen des Kupplungselementes und Verbinden des Kupplungselementes mit der Spannstange verbunden.

Das Anbringen der Spannvorrichtung an die Werkzeugmaschine ist nicht auf die oben beschriebene Vorgehensweise beschränkt, sondern kann an die Bedürfnisse des Bedienpersonals und die örtlichen Gegebenheiten angepasst werden. Ebenso ist die Spannvorrichtung nicht auf die mechanische Bearbeitung von Pleuelstangen beschränkt, sondern kann an die Form und Größe anderer Werkstücke, wie z.B. Kurbelwellen, Nockenwellen, etc. angepasst werden. Dies geschieht in der Regel durch Einsetzen dafür geeigneter Spannelemente auf die Spannplatte.

## Patentansprüche

1. Spannvorrichtung (1) zum Spannen von Werkstücken (2), insbesondere Pleuelstangen, für deren mechanische Bearbeitung auf einer Werkzeugmaschine, umfassend:
eine Spannplatte (8) mit zwei Stirnflächen und mehreren Seitenflächen;
eine Zentriereinrichtung (28) zum Vorzentrieren der Spannplatte (8) in eine vorbestimmte Position auf einem Spannvorrichtungsgrundkörper (3);
eine Befestigungseinrichtung (12) zum Befestigen der Spannplatte (8) auf dem Spannvorrichtungsgrundkörper (3);
mindestens ein Spannelement (4,6), das an einer Stirnfläche der Spannplatte (8) zum Aufspannen des Werkstücks (2) auf die Spannplatte (8) angebracht ist, wobei das Spannelement (4,6) zwischen einer ersten das Werkstück (2) freigebenden Position und einer zweiten das Werkstück (2) aufspannenden Position bewegbar ist;
mindestens eine Betätigungseinrichtung (24), die mit dem Spannelement (4,6) zusammenwirkt, um das Spannelement (4,6) zwischen der ersten Position und der zweiten Position zu bewegen, wodurch das Werkstück (2) auf die Spannplatte (8) aufgespannt bzw. freigegeben wird.

2. Spannvorrichtung (1) nach Anspruch 1, weiter umfassend:
ein Kupplungselement (16, 18), das eine Verbindung zwischen der Betätigungseinrichtung (24) und dem Spannelement (4,6) herstellt, und eine von der Betätigungseinrichtung (24) erzeugte Kraft auf das Spannelement (4,6) überträgt.

3. Spannvorrichtung nach Anspruch 2, **dadurch gekennzeichnet, dass** das Kupplungselement (16) formschlüssig dem der Spannplatte (8) zugewandten Ende des an der Betätigungseinrichtung (24) angebrachten Kupplungsteils (18) angepasst ist.

4. Spannvorrichtung nach einem der vorhergehenden Ansprüche, **dadurch gekennzeichnet, dass** die Betätigungseinrichtung (24) an der Werkzeugmaschine angebracht ist und von der Spannplatte (8) trennbar ist.

5. Spannvorrichtung nach einem der vorhergehenden Ansprüche, **dadurch gekennzeichnet, dass** die Betätigungseinrichtung (24) eine Hydraulikvorrichtung ist, die über einen Hub eines Kolbens das Spannelement (4,6) betätigt.

6. Spannvorrichtung nach Anspruch 5, **dadurch gekennzeichnet, dass** der Kolbenhub bis zu 10mm beträgt.

7. Spannvorrichtung nach einem der vorhergehenden Ansprüche, **dadurch gekennzeichnet, dass** das Spannelement (4, 6) zumindest ein ortsfestes Halteelement (10) an der Spannplatte (8) umfasst, das in Einbaulage der Spannplatte (8) ein Abgleiten des Werkstücks (2) in der ersten Position des Spannelements (4,6) von der Spannplatte (8) verhindert.

8. Spannvorrichtung nach einem der vorhergehenden Ansprüche, **dadurch gekennzeichnet, dass** das Spannelement (4,6) formangepasst zum Spannen einer Pleuelstange (2) mit einem großen Pleuelauge (2A) und einem kleinen Pleuelauge (2B) ist.

9. Spannvorrichtung nach Anspruch 7 und 8, **dadurch gekennzeichnet, dass** das Halteelement ein V-förmiges Halteelement (10) ist, wobei der Öffnungswinkel des V-förmigen Halteelements (10) veränderbar ist, um so verschieden große Pleuelaugen (2B) aufnehmen zu können.

10. Spannvorrichtung nach Anspruch 8 oder 9, **dadurch gekennzeichnet, dass** die Spannplatte (8) zwei backenförmige Spannelemente (4), die bewegbar mit der Spannplatte (8) befestigt sind und das große Pleuelauge (2A) in der zweiten Position des Spannelements (4) aufspannen, und ein plattenförmig ausgebildetes Spannelement (6) aufweist, das das kleine Pleuelauge (2B) in der zweiten Position des Spannelements (6) aufspannt.

11. Spannvorrichtung nach Anspruch 10, **dadurch gekennzeichnet, dass** die zwei backenförmigen Spannelemente (4) und das plattenförmig ausgebildete Spannelement (6) jeweils unabhängig voneinander mit einem Hydraulikzylinder (24) zusammenwirken.

12. Spannvorrichtung nach einem der vorhergehenden Ansprüche, **dadurch gekennzeichnet, dass** die Spannplatte (8) an einer Seitenfläche eine Bohrung aufweist zum Aufnehmen der Zentriereinrichtung (28).

13. Spannvorrichtung nach einem der vorhergehenden Ansprüche, **dadurch gekennzeichnet, dass** die Zentriereinrichtung eine Fixierbuchse (28) an einer Seitenfläche der Spannplatte ist, die mit einem entsprechenden Dorn an der Werkzeugmaschine zusammenwirkt.

14. Spannvorrichtung nach einem der vorhergehenden Ansprüche, **dadurch gekennzeichnet, dass** die Spannplatte (8) mit mindestens einem Werkstück (2) bestückbar ist.

15. Spannvorrichtung nach einem der vorhergehenden Ansprüche, **dadurch gekennzeichnet, dass** die Befestigungseinrichtung (12) mindestens eine Befestigungsschraube aufweist, die im montierten Zustand der Spannplatte (8) auf der Werkzeugmaschine im Eingriff mit einer Auflagefläche des Spannvorrichtungsgrundkörpers (3) ist.

16. Spannvorrichtung nach einem der Ansprüche 5 bis 15, **dadurch gekennzeichnet, dass** die Spannplatte (8) im montierten Zustand auf der Werkzeugmaschine durch zwei an die Spannplatte (8) angrenzende seitliche Wände (32) gegen die durch den Hydraulikkolben erzeugten Kräfte gestützt ist.

17. Spannvorrichtung nach einem der vorhergehenden Ansprüche, **dadurch gekennzeichnet, dass** die Betätigungseinrichtung (24) von der Stirnfläche der Spannplatte (8) auf das mindestens eine Spannelement (4,6) wirkt, die kein Spannelement (4,6) aufweist.

18. Verwendung der Spannvorrichtung nach einem der Ansprüche 1 bis 17 in Zusammenhang mit einer Werkzeugmaschine zur mechanischen Bearbeitung des Werkstücks (2).

19. Verwendung der Spannvorrichtung nach Anspruch 18, **dadurch gekennzeichnet, dass** die mechanische Bearbeitung im wesentlichen das Bohren von Löchern in Pleueln vorsieht.
